# EUROPÄISCHE PATENTSCHRIFT

(11) **EP 0 907 066 B1**
(45) Veröffentlichungstag und Bekanntmachung des Hinweises auf die Patenterteilung: **04.01.2006**
(21) Anmeldenummer: 98116516.0
(22) Anmeldetag: 01.09.1998
(51) Int. Cl.: G01B 5/24

(54) **Winkelmessgerät**
Angle measuring device
Dispositif de mesure d'angles

(30) Priorität: 02.10.1997 DE 19743568
(43) Veröffentlichungstag der Anmeldung: 07.04.1999
(73) Patentinhaber: ROBERT BOSCH GMBH, 70442 Stuttgart (DE)
(72) Erfinder: Matzo, David, 72124 Pliezhausen (DE); Skultety-Betz, Uwe, 70711 Leinfelden-Echterdingen (DE)

(56) Entgegenhaltungen:
- DE-A- 3 605 909
- DE-A- 4 237 076
- DE-A- 4 240 625
- DE-U- 8 902 987
- DE-U- 29 703 041
- US-A- 4 626 682

## Beschreibung

### Stand der Technik

Die Erfindung geht aus von einem Winkelmeßgerät nach dem Oberbegriff des Anspruchs 1. Es ist schon ein Winkelmeßgerät bekannt (DE-U-89 02 987.9), das zwei um eine gemeinsame Schwenkachse relativ zueinander schwenkbare Schenkel aufweist, die über ein Potentiometer miteinander gekoppelt sind, das die Messung des zwischen den Schenkeln eingeschlossenen Winkels ermöglicht.

Aufgrund der Berührung von Schleifer und Widerstandsbahn des Potentiometers kann sich nach längerem Gebrauch ein unerwünschter Verschleiß einstellen. Darüber hinaus ist die potentiometrische Messung des Winkels mit Fehlern behaftet, die über einer gewünschten Winkelauflösung im 0,1°-Bereich liegen.

Weiterhin ist ein Winkelmeßgerät bekannt (DE 297 03 041 U1), das mit zwei drehschlüssig gekoppelten, drehend anzutreibenden Scheiben ausgestattet ist, die jeweils mit schenkelfesten Sensoren zusammenwirken. Antriebswelle und Sensoren sind bei diesem Winkelmeßgerät an unterschiedlichen Schenkeln gelagert, was eine erhöhte Meßungenauigkeit mit sich bringt. Das Vorsehen von zwei Scheiben mit zugehöriger Sensorik ist zudem aufwendig und daher teuer in der Herstellung. Der bei dem bekannten Winkelmeßgerät erforderliche große Bauraum macht die Unterbringung des Antriebes der Scheiben innerhalb eines Schwenkgelenks der Schenkel unmöglich. Dadurch wird das Abtragen eines zwischen den Schenkeln eingestellten Winkels bzw. das Anlegen der Schenkel an einen zu ermittelnden Winkel erschwert. Die gegenseitige Lagerung der Schenkel erfolgt über drei in einer Ebene angeordnete Wälzlager, die fertigungsbedingt keine ausreichende Konzentrizität der Schenkel gewährleisten.

### Vorteile der Erfindung

Das erfindungsgemäße Winkelmeßgerät mit den Merkmalen des Anspruchs 1 hat den Vorteil, eine kostengünstige Winkelmessung bei hoher Meßgenauigkeit zu ermöglichen.

Durch die in den abhängigen Ansprüchen aufgeführten Maßnahmen sind vorteilhafte Weiterbildungen und Verbesserungen des erfindungsgemäßen Winkelmeßgeräts möglich. Besonders vorteilhaft ist die Ausbildung des Gelenks mit einem hohlzylindrischen Lagerteil, das die Antriebsmittel in sich aufnimmt. Auf diese Weise ist eine platzsparende Anordnung möglich, die die Unterbringung des Schwenkgelenks innerhalb des Schenkelprofils gestattet.

### Zeichnung

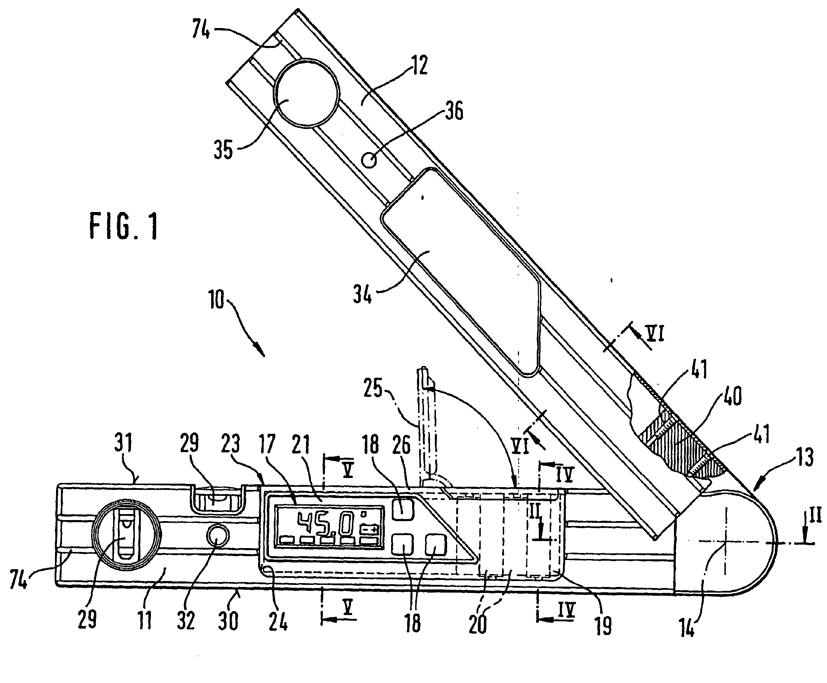

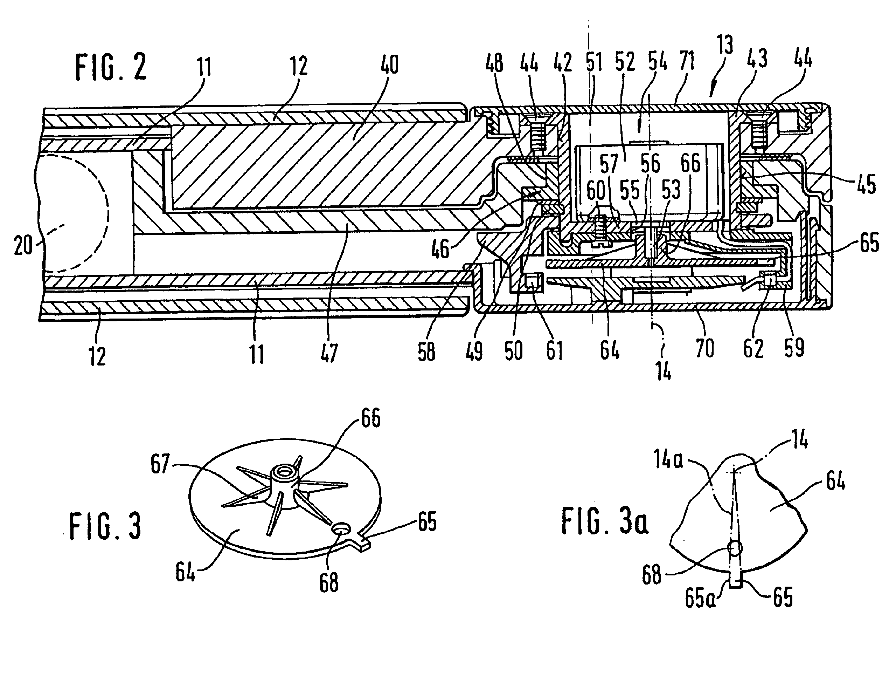

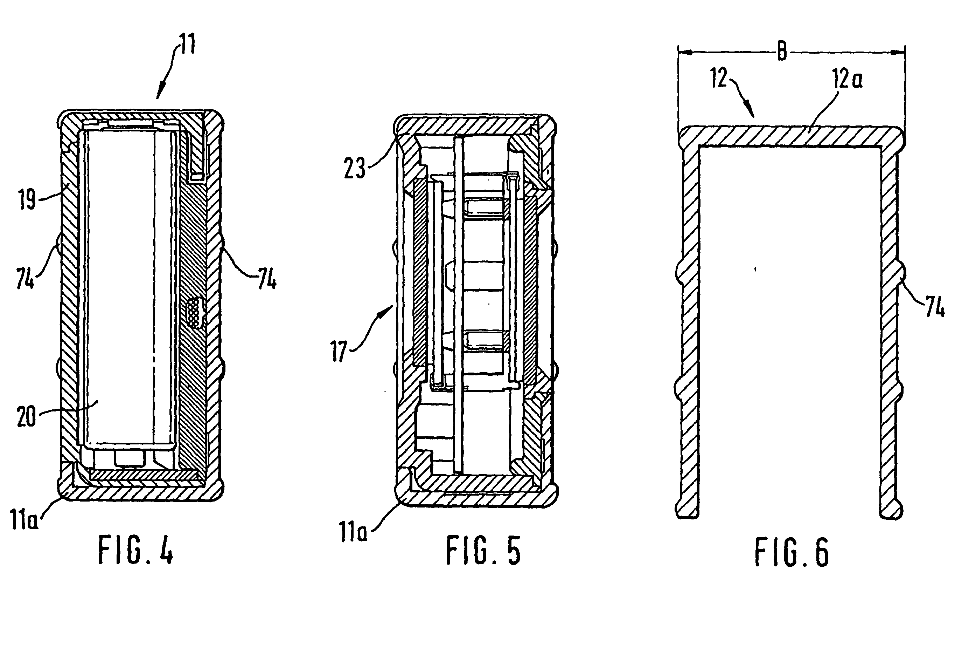

Ein Ausführungsbeispiel der Erfindung ist in der Zeichnung dargestellt und in der nachfolgenden Beschreibung näher erläutert. Es zeigen Figur 1 eine Ansicht des erfindungsgemäßen Winkelmeßgeräts, Figur 2 einen Schnitt entlang Linie II-II in Figur 1, Figur 3 eine perspektivische Darstellung eines Rotors aus Figur 2, Figur 3a eine Teilansicht des Rotors, Figur 4 einen Schnitt gemäß Linie IV-IV in Figur 1, Figur 5 einen Schnitt gemäß Linie V-V in Figur 1 und Figur 6 einen Schnitt gemäß Linie VI-VI in Figur 1.

### Beschreibung des Ausführungsbeispiels

In Figur 1 ist mit 10 ein Winkelmeßgerät bezeichnet, das einen ersten Schenkel 11 und einen zweiten Schenkel 12 aufweist. Die Schenkel 11 und 12 sind über ein Gelenk 13 um eine gemeinsame Schwenkachse 14 relativ zueinander schwenkbar gelagert.

Der erste Schenkel 11 ist als rechteckförmiges Hohlprofil 11a und der zweite Schenkel 12 als U-Profil 12a ausgebildet. Eine offene Seite des U-Profils 12a ist dem Hohlprofil 11a derart zugewandt, daß das Hohlprofil 12a vom U-Profil 12a in einer Einklappstellung des Winkelmeßgeräts 10 in sich aufgenommen wird. Im Hohlprofil 11a des ersten Schenkels 11 ist eine Anzeigevorrichtung 17 zur Anzeige von Winkelwerten sowie Funktionstasten 18 für die Eingabe von Befehlen untergebracht. Darüber hinaus befindet sich im ersten Schenkel 11 ein Batteriegehäuse 19 zur Aufnahme gestrichelt angedeuteter Batterien bzw. Akkuzellen 20 und eine mit der Anzeigevorrichtung 17 gekoppelte Auswerteeinrichtung 21. Die Bauteile 17 bis 21 sind zu einer Montageeinheit 23 zusammengesetzt und in eine zum zweiten Schenkel 12 hin offene U-förmige Aussparung im ersten Schenkel 11 eingesetzt. Das Batteriegehäuse 19 ist mittels eines Deckels 25 verschließbar, der gelenkig in einem Gehäuse 26 der Montageeinheit 23 gelagert ist und zum Schließen des Batteriegehäuses 19 mit dem Gehäuse 26 verrastet.

Im ersten Schenkel 11 befinden sich ferner Wasserwaagen-Libellen 28, 29 zur vertikalen und horizontalen Ausrichtung des ersten Schenkels 11. Die Libellen 28, 29 sind abgestimmt auf eine erste Auflagefläche 30 am ersten Schenkel 11, die parallel zu einer inneren Auflagefläche 31 liegt. Ein Durchgangsloch 32 durchragt den ersten Schenkel 11 in Querrichtung parallel zur Schwenkachse 14.

Der U-förmige zweite Schenkel 12 weist in seinen beiden parallelen Seitenflächen verschiedene fensterförmige Sichtausnehmungen auf. Ein erstes Sichtfenster 34 gestattet das Ablesen der Anzeigevorrichtung 17 und die Bedienung der Funktionstasten 18 in der Einklappstellung. Ein zweites Sichtfenster 35 erlaubt in dieser Stellung den Blick auf die Libelle 29. Ein Fenster 36 fluchtet in der Einklappstellung mit dem Durchgangsloch 32, so daß das Winkelmeßgerät 10 in der Einklappstellung z.B. an einen Wandhaken gehängt werden kann.

In Figur 2 ist das Gelenk 13 näher dargestellt. Am U-Profil des zweiten Schenkels 12 ist ein Grundkörper 40 durch Schrauben 41 (Figur 1) befestigt. Der Grundkörper 40 bildet im Bereich des Gelenks 13 eine zylindrische Aufnahme 42, in die ein Lagerteil 43 zentral eingesetzt ist und mittels Befestigungsschrauben 44 festgelegt ist. Das Lagerteil 43 ist hohlzylindrisch geformt. Nach innen zu bildet das Lagerteil 43 einen Topfboden 57. Mit seinem Außenumfang 45 bildet das Lagerteil 43 eine Lageraufnahme 46.

Die Lageraufnahme 46 liegt konzentrisch zur Schwenkachse 14 und lagert einen Schwenkarm 47 über eine Gleitbuchse 48 am Lagerteil 43. Der Schwenkarm 47 ist mit dem ersten Schenkel 11 drehfest verbunden. Die Gleitbuchse 48 ist über einen Gleitring 49 und einen Sprengring 50 am Lagerteil 43 axial gesichert. Eine nicht näher dargestellte Federscheibe bzw. Tellerfeder zwischen Sprengring 50 und Gleitbuche 48 sorgt für den Ausgleich des Axialspieles und für den gewünschten Verdrehwiderstand zwischen den Schenkeln 11, 12.

Das Lagerteil 43 nimmt in seinem zentralen Hohlraum 51 einen elektrischen Antriebsmotor 52 auf. Der Antriebsmotor 52 hat eine Antriebswelle 53, die konzentrisch zur Schwenkachse 14 liegt. Die Antriebswelle 53 steht aus einem zylindrischen Lagervorsprung 55 hervor, der vom Gehäuse des Antriebsmotors 52 gebildet wird und durch Eingriff in eine konzentrische Bohrung 56 im Boden 57 des Lagerteils 43 mit der Schwenkachse 14 fluchtend zentriert wird. Antriebsmotor 52 und Antriebswelle 53 bilden Antriebsmittel 54 für einen Rotor 64.

Am Außenumfang 45 des Lagerteils 43 ist ein Schwenkträger 58 drehbar gelagert, der mit dem ersten Schenkel 11 drehgekoppelt ist. Ein weiterer Träger 59 ist über eine Halteschraube 60 mit dem Lagerteil 43 fest verbunden und somit drehfest am zweiten Schenkel 12 angeordnet. Schwenkträger 58 und Träger 59 tragen jeweils einen Sensor 61, 62. Im Beispielfall werden die Sensoren 61, 62 durch Lichtschranken gebildet, es können jedoch auch andere berührungslose Sensoren wie beispielsweise Hall-Geber Verwendung finden.

Auf der Antriebswelle 53 ist der Rotor 64 drehfest angeordnet. Der Rotor 64 ist als kreisförmige Scheibe ausgebildet, an die radial außen eine Nase 65 angeformt ist. Zur Befestigung auf der Antriebswelle 53 ist der Rotor 64 mit einer Nabe 66 versehen. Aus Stabilitätsgründen ist die Nabe 66 mit dem scheibenförmigen Teil des Rotors 64 über Rippen 67 verbunden. Im scheibenförmigen Teil ist zwischen Nase 65 und Schwenkachse 14 eine Ausgleichsbohrung 68 vorgesehen, mittels der eine von der Nase 65 bedingte Unwucht ausgeglichen wird.

In Figur 3a ist die Nase 65 dargestellt, die am Außenumfang des Rotos 64 angeordnet ist. Die Nase 65 weist eine Unterbrecherkante 65a auf, die sich zumindest im Bereich der Überdeckung mit den Sensoren 61, 62 entlang eines durch die Schwenkachse 14 gehenden Radialstrahls 14a erstreckt. Auf diese Weise ist die Unterbrechung unabhängig von Toleranzen hinsichtlich des Abstandes von Schwenkachse 14 und Nase 65.

Das Gelenk 13 ist seitens des ersten Schenkels 11 mittels eines ersten Deckels 70 und seitens des zweiten Schenkels 12 durch einen Deckel 71 abgedeckt. Der Antriebsmotor 52 ist über nicht näher dargestellte Anschlußleitungen mit den Batterien 20 verbunden. Das Gelenk 13 ist derart kompakt ausgebildet, daß es innerhalb einer Breite B des zweiten Schenkels 12 liegt, wodurch sich sehr gute Anlegeeigenschaften für das Winkelmeßgerät 10 ergeben.

In den Figuren 4 und 5 ist der Schenkel 11 jeweils geschnitten dargestellt, wobei in Figur 4 eine Batterie 20 im Batteriegehäuse 19 erkennbar ist und in Figur 5 die Anzeigevorrichtung 17 in der Montageeinheit 23 dargestellt ist. In Figur 6 ist das den ersten Schenkel 11 aufnehmende U-Profil des zweiten Schenkels 12 dargestellt.

Die Funktion des Winkelmeßgerätes ist wie folgt: Zur Winkelmessung wird der Rotor 64 durch die Antriebsmittel 54 in Drehung versetzt. Dabei werden die Sensoren 61, 62 periodisch von der Unterbrecherkante 65a der Nase 65 durchlaufen. Die Sensoren 61, 62 erzeugen beim Durchlauf der Nase 65 jeweils Signalpegeländerungen, die in der Auswerteinrichtung 21 vorzugsweise mittels elektronischer Zähler erfaßt und in Winkelwerte umgesetzt werden. Durch die Erfassung der Laufzeit zwischen dem Passieren der Sensoren 61, 62 und die Erfassung der Umlaufzeit bis zum erneuten Passieren des jeweiligen Sensors 61, 62 läßt sich ein Winkelverhältnis bilden, das unabhängig von Drehzahlschwankungen zwischen verschiedenen Durchläufen ist. Das entsprechende Winkelverhältnis wird mit einer konstanten Winkelgröße, z.B. 360°, multipliziert und in der Anzeigevorrichtung 17 ausgegeben.

## Patentansprüche

1. Winkelmeßgerät, mit wenigstens zwei Schenkeln (11, 12), die in einem Gelenk (13) um eine gemeinsame Schwenkachse (14) relativ zueinander schwenkbar gelagert sind, mit wenigstens einem Rotor (64), der über Antriebsmittel (54) um eine Drehachse drehend antreibbar ist, die mit der Schwenkachse (14) fluchtet, mit Referenzpunkten (61, 62), die den Schenkeln (11, 12) zugeordnet sind, und mit wenigstens einer Referenzmarke (65) an jedem Rotor (64), die mit diesem mitdreht und die Referenzpunkte (61, 62) auf einer umlaufenden Bahn passiert, **dadurch gekennzeichnet, daß** das Gelenk (13) ein zentrales Lagerteil (43) hat, das mit einem der Schenkel (12) fest verbunden ist und eine konzentrisch zur Schwenkachse (14) angeordnete Lageraufnahme (46) für den bzw. die anderen Schenkel (11) bildet.

2. Winkelmeßgerät nach Anspruch 1, **dadurch gekennzeichnet, daß** das Lagerteil (43) hohlzylindrisch, vorzugsweise topfförmig, ausgebildet ist und zumindest zum Teil die Antriebsmittel (54) in sich aufnimmt, wobei die Lageraufnahme (46) für den anderen Schenkel (11) am Außenumfang des Lagerteils (43) vorgesehen ist.

3. Winkelmeßgerät nach Anspruch 2, **dadurch gekennzeichnet, daß** die Antriebsmittel (54) einen Antriebsmotor (52) aufweisen, der mit einem Lagervorsprung (55) versehen ist, der konzentrisch zu einer Drehachse einer Antriebswelle (53) des Antriebsmotors (52) ausgerichtet ist und der in eine in einem Topfboden (57) des Lagerteils (43) befindliche Bohrung (56) greift, die konzentrisch zur Schwenkachse (14) liegt.

4. Winkelmeßgerät nach einem der vorhergehenden Ansprüche, **dadurch gekennzeichnet, daß** ein erster Schenkel (11) aus einem viereckförmigen Hohlprofil (11a) und ein zweiter Schenkel (12) aus einem U-Profil (12a) besteht, wobei das U-Profil (12a) das Hohlprofil (11a) in einer Einklappstellung des Winkelmeßgeräts (10) in sich aufnimmt.

5. Winkelmeßgerät nach Anspruch 4, **dadurch gekennzeichnet, daß** jeder Schenkel (11, 12) wenigstens ein Durchgangsloch (32, 36) aufweist, das in der Einklappstellung des Winkelmeßgeräts (10) mit dem entsprechenden Durchgangsloch des jeweils anderen Schenkels (12, 11) in Deckung kommt.

6. Winkelmeßgerät nach einem der vorgehenden Ansprüche,
**dadurch gekennzeichnet, daß** die Referenzpunkte (61, 62) verschiedener Schenkel (11, 12) derart angeordnet sind, daß sie nacheinander von der Referenzmarke (65) desselben Rotors (64) durchlaufen werden.

7. Winkelmeßgerät nach einem der Ansprüche 1 bis 6, **dadurch gekennzeichnet, daß** als schenkelseitige Referenzpunkte (61, 62) Sensoren dienen.

8. Winkelmeßgerät nach Anspruch 7, **dadurch gekennzeichnet, daß** die Sensoren (61, 62) durch Gabellichtschranken gebildet werden und die rotorseitige Referenzmarke durch eine über den Umfang des Rotors (34) hinausstehende Nase (65) gebildet wird.

9. Winkelmeßgerät nach Anspruch 8, **dadurch gekennzeichnet, daß** die Nase (65) eine Unterbrecherkante aufweist, die zumindest teilweise entlang eines durch die Schwenkachse (14) gehenden Radialstrahls ausgebildet ist.

10. Winkelmeßgerät nach Anspruch 9, **dadurch gekennzeichnet, daß** der Rotor (64) im wesentlichen als Scheibe ausgebildet ist, die zwecks Ausgleich von Unwucht eine Ausgleichsbohrung (68) radial zwischen Nase (65) und Schwenkachse (14) aufweist.

11. Winkelmeßgerät nach Anspruch 7 oder 8, **dadurch gekennzeichnet, daß** das Lagerteil (43) einen Schwenkträger (58) konzentrisch zur Drehachse (14) lagert, der mit einem ersten Schenkel (11) drehschlüssig gekoppelt ist und der einen diesem Schenkel (11) zugeordneten Sensor (61) trägt.

12. Winkelmeßgerät nach Anspruch 7, 8 oder 11, **dadurch gekennzeichnet, daß** am Lagerteil (43) ein Träger (59) drehfest gelagert ist, der einen dem zweiten Schenkel (12) zugeordneten Sensor (62) trägt.

13. Winkelmeßgerät nach einem der vorhergehenden Ansprüche, **dadurch gekennzeichnet, daß** die Schenkel (11, 12) seitliche Meßflächen (11b, 12b) aufweisen und demgegenüber um 90° versetzte Auflageflächen (11c, 12c) haben, die nach außen vorstehende Rippen (74) aufweisen.

14. Winkelmeßgerät nach einem der vorhergehenden Ansprüche, **dadurch gekennzeichnet, daß** in einem der Schenkel (11, 12) eine Auswerteeinrichtung (21) zusammen mit einer Anzeigevorrichtung (17) und Funktionstasten (18) untergebracht sind, die zu einer Montageeinheit (23) zusammengefaßt in den jeweiligen Schenkel (11, 12) eingesetzt sind.

## Claims

1. Angle measuring device having at least two limbs (11, 12), which are mounted in a joint (13) such that they can be pivoted relative to each other about a common pivot axis (14), having at least one rotor (64), which can be driven in rotation by drive means (54) about an axis of rotation which is aligned with the pivot axis (14), having reference points (61, 62) which are assigned to the limbs (11, 12), and having at least one reference mark (65) on each rotor (64), which corotates with the latter and passes the reference points (61, 62) on a circulation path, **characterized in that** the joint (13) has a central bearing part (43) which is firmly connected to one of the limbs (12) and forms a bearing holder (46) arranged concentrically with respect to the pivot axis (14) for the other limb or limbs (11).

2. Angle measuring device according to Claim 1, **characterized in that** the bearing part (43) is hollow-cylindrical, preferably pot-shaped, and at least partly accommodates the drive means (54) in itself, the bearing holder (46) for the other limb (11) being provided on the outer circumference of the bearing part (43).

3. Angle measuring device according to Claim 2, **characterized in that** the drive means (54) have a drive motor (52), which is provided with a bearing projection (55) which is aligned concentrically with respect to an axis of rotation of a drive shaft (53) of the drive motor (52) and which engages in a hole (56) located in a base (57) of the pot part of the bearing part (43) and which is located concentrically with respect to the pivot axis (14).

4. Angle measuring device according to one of the preceding claims, **characterized in that** a first limb (11) consists of a rectangular hollow profile (11a) and a second limb (12) consists of a U-shaped profile (12a), the U-shaped profile (12a) accommodating the hollow profile (11a) in itself in a folded-in position of the angle measuring device (10).

5. Angle measuring device according to Claim 4, **characterized in that** each limb (11, 12) has at least one through hole (32, 36) which, in the folded-in position of the angle measuring device (10), comes into coincidence with the corresponding through hole in the respective other limb (12, 11).

6. Angle measuring device according to one of the preceding claims, **characterized in that** the reference points (61, 62) of different limbs (11, 12), are arranged in such a way that they are passed successively by the reference mark (65) of the same rotor (64).

7. Angle measuring device according to one of Claims 1 to 6, **characterized in that** sensors are used as the reference points (61, 62) on the limbs side.

8. Angle measuring device according to Claim 7, **characterized in that** the sensors (61, 62) are formed by fork light barriers and the reference mark on the rotor side is formed by a lug (65) protruding beyond the circumference of the rotor (34).

9. Angle measuring device according to Claim 8, **characterized in that** the lug (65) has an interrupter edge which is formed at least partly along a radial ray going through the pivot axis (14).

10. Angle measuring device according to Claim 9, **characterized in that** the rotor (64) is substantially formed as a disc which, for the purpose of compensating for imbalance, has a compensating hole (68) radially between lug (65) and pivot axis (14).

11. Angle measuring device according to Claim 7 or 8, **characterized in that** the bearing part (43) mounts a pivoting support (58) concentrically with respect to the axis of rotation (14), which part is coupled to a first limb (11) so as to rotate with it and which bears a sensor (61) assigned to this limb (11).

12. Angle measuring device according to Claim 7, 8 or 11, **characterized in that** a carrier (59) which bears a sensor (62) assigned to the second limb (12) is firmly mounted on the bearing part (43) so as to rotate with it.

13. Angle measuring device according to one of the preceding claims, **characterized in that** the limbs (11, 12) have lateral measuring surfaces (11b, 12b) and supporting surfaces (11c, 12c) which are offset by 90° with respect thereto and which have outwardly projecting ribs (74).

14. Angle measuring device according to one of the preceding claims, **characterized in that** in one of the limbs (11, 12) there is accommodated an evaluation device (21) together with an indicating device (17) and function keys (18), which, combined into one mounting unit (23), are inserted into the respective limb (11, 12).

## Revendications

1. Appareil de mesure angulaire comportant :
- au moins deux branches (11, 12) montées dans une articulation (13) autour d'un axe de pivotement (14) commun de manière à pivoter l'une par rapport à l'autre.
- au moins un rotor (64) qui, par l'intermédiaire de moyens d'entraînement (54), peut être entraîné en tournant autour d'un axe de rotation aligné avec l'axe de pivotement (14),
- des points de référence (61, 62) associés aux branches (11, 12) et
- sur chaque rotor (64) au moins une marque de référence (65) qui tourne avec lui et qui parcourt les points de référence (61, 62) sur une trajectoire périphérique,
**caractérisé en ce que**
l'articulation (13) a une partie de palier (43) centrale reliée fixemement à l'une des branches (12) ainsi qu'un logement de palier (46) concentrique par rapport à l'axe de pivotement (14) et destiné à l'autre ou aux autres branches (11).

2. Appareil de mesure angulaire selon la revendication 1.
**caractérisé en ce que**
la partie de palier (43) est cylindrique creuse, de préférence en forme de creuset, et reçoit en elle au moins partiellement les moyens d'entraînement (54), le logement de palier (46) destiné à l'autre branche (11) étant prévu sur le pourtour extérieur de la partie de palier (43).

3. Appareil de mesure angulaire selon la revendication 2,
**caractérisé en ce que**
les moyens d'entraînement (54) comportent un moteur d'entraînement (52) muni d'une saillie de palier (55) qui est concentrique à un axe de rotation d'un arbre d'entraînement (53) du moteur d'entraînement (52) et qui pénètre dans un perçage (56) situé dans un fond de creuset (57) de la partie de palier (43) et concentrique à l'axe de pivotement (14).

4. Appareil de mesure angulaire selon l'une des revendications précédentes,
**caractérisé en ce que**
une première branche (11) est un profilé creux (11a) carré et une deuxième branche (12) est un profilé en U (12a), le profilé en U (12a) recevant le profilé creux (11a) lorsque l'appareil de mesure angulaire (10) est en position repliée.

5. Appareil de mesure angulaire selon la revendication 4,
**caractérisé en ce que**
chaque branche (11. 12) présente au moins un trou de passage (32, 36) qui coïncide avec le trou de passage correspondant dans l'autre branche (11, 12) respective lorsque l'appareil de mesure angulaire (10) est en position repliée.

6. Appareil de mesure angulaire selon l'une des revendications précédentes,
**caractérisé en ce que**
les points de référence (61, 62) de différentes branches (11, 12) sont disposés de telle manière qu'ils sont successivement parcourus par la marque de référence (65) du même rotor (64).

7. Appareil de mesure angulaire selon l'une des revendications 1 à 6.
**caractérisé en ce que**
des capteurs servent de points de référence (61, 62) sur les branches.

8. Appareil de mesure angulaire selon la revendication 7,
**caractérisé en ce que**
les capteurs (61, 62) sont formés par des barrières lumineuses fourchues et la marque de référence côté rotor est formée par un bec (65) proéminent sur le pourtour du rotor (34).

9. Appareil de mesure angulaire selon la revendication 8,
**caractérisé en ce que**
le bec (65) comporte une arête d'arrêt formée au moins en partie le long d'un rayon radial qui passe par l'axe de pivotement (14).

10. Appareil de mesure angulaire selon la revendication 9,
**caractérisé en ce que**
le rotor (64) est pratiquement un disque muni d'un perçage de compensation (68) radial entre le bec (65) et l'axe de pivotement (14) afin de compenser le déséquilibre.

11. Appareil de mesure angulaire selon la revendication 7 ou 8,
**caractérisé en ce que**
la partie de palier (43) reçoit un support pivotant (58), concentrique à l'axe de rotation (14), qui est couplé par combinaison de rotation à une première branche (11) et qui porte un capteur (61) associé à cette branche (11).

12. Appareil de mesure angulaire selon la revendication 7, 8 ou 11.
**caractérisé en ce que** un support (59) qui porte un capteur (62) associé à la deuxième branche (12) est monté sur la partie de palier (43) de façon à ne pas tourner.

13. Appareil de mesure angulaire selon l'une des revendications précédentes,
**caractérisé en ce que**
les branches (11, 12) comportent des surfaces de mesure (11b, 12b) latérales et, décalées de 90° par rapport à elles, des surfaces d'appui (11c, 12c) munies de nervures (74) en saillie vers l'extérieur.

14. Appareil de mesure angulaire selon l'une des revendications précédentes,
**caractérisé en ce que** une installation d'exploitation (21) ainsi qu'un dispositif d'affichage (17) et des touches de fonction (18) sont placés dans une des branches (11, 12) et, rassemblés en une unité de montage (23), sont introduits dans la branche (11, 12) respective.
